# EUROPÄISCHE PATENTSCHRIFT

(11) **EP 1 050 496 B1**
(45) Veröffentlichungstag und Bekanntmachung des Hinweises auf die Patenterteilung: **03.03.2004**
(21) Anmeldenummer: 00109299.8
(22) Anmeldetag: 29.04.2000
(51) Int. Cl.: B65G 53/46

(54) **Verfahren und Vorrichtung zum Öffnen und Schliessen einer Förderleitung**
Method and apparatus for opening and closing a transport pipe
Méthode et dispositif pour l'ouverture et la fermeture d'un tuyau de transport

(30) Priorität: 04.05.1999 DE 19920288
(43) Veröffentlichungstag der Anmeldung: 08.11.2000
(73) Patentinhaber: Colortronic GmbH, D-61381 Friedrichsdorf (DE)
(72) Erfinder: Schmidt, Veith, 63071 Offenbach (DE)
(74) Vertreter: Schieferdecker, Lutz, Dipl.-Ing.

(56) Entgegenhaltungen:
- DE-A- 3 327 857
- DE-C- 311 691
- DE-C- 615 970
- DE-C- 728 060
- GB-A- 995 130

## Beschreibung

Die Erfindung betrifft ein Verfahren zum Öffnen und Schließen einer Rohrleitung an einem Abscheider für mittels Förderluft zugeführtes Schüttgut gemäß dem Oberbegriff des Anspruchs 1, bei dem zwei in Durchtrittsrichtung hintereinander befindliche Stellen geöffnet und jeweils zeitversetzt geschlossen werden und eine Vorrichtung zur Durchführung des Verfahrens gemäß dem Oberbegriff des Anspruchs 4.

Ein solches Verfahren ist aus GB-A 995 130 bekannt. Dort ist unter dem trichterförmigen Abscheider, an dessen oberem Ende die mit Schüttgut beladene Förderluft umfangsseitig eintritt und zentral wieder austritt, eine an das untere Trichterende anschließende senkrechte Rohrleitung vorgesehen, an deren oberem Ende eine die erste bzw. vordere Schließstelle bildende obere Absperreinrichtung und an deren unterem Ende eine die zweite oder hintere Schließstelle bildende untere Absperreinrichtung vorgesehen sind. Die Rohrleitung ist zwischen den beiden Absperreinrichtungen aufgeweitet, um ein vergrössertes Speichervolumen zu bilden. Die Betätigung der beiden Absperreinrichtungen erfolgt mittels Kolben-Zylindereinrichtungen, die im Wechsel so gesteuert sind, dass stets zumindest eine Absperreinrichtung geschlossen ist. Die beiden Absperreinrichtungen sind identisch ausgebildet und verschließen sowohl gegen den Durchtritt von Schüttgut wie von Förderluft.

Aus der DE-728 060 ist ein gattungsgemäßes Verfahren und eine gattungsgemäße Vorrichtung bekannt.

Mit der bekannten Vorrichtung wird das Schüttgut chargenweise durch die Rohrleitung durchgeschleust, wobei zunächst die untere Absperreinrichtung geschlossen und die Rohrleitung mit Schüttgut aufgefüllt wird, worauf die obere Absperreinrichtung geschlossen und dann die untere Absperreinrichtung geöffnet wird, um die Rohrleitung nach unten zu entleeren. Nachteilig ist eine vergleichsweise große Bauhöhe der Vorrichtung, die durch den erforderlichen Höhenabstand zwischen den beiden Absperreinrichtungen bedingt ist, sowie die Gefahr, dass Förderluft in die Rohrleitung eintritt, weil beim Schließen insbesondere der oberen Absperreinrichtung das Schüttgut abgequetscht wird und zwischen Verschlußelement und Schüttgut gelangt, so dass die Absperreinrichtung nicht vollständig luftdicht schließt.

Dementsprechend liegt der Erfindung die Aufgabe zugrunde, eine verbesserte Abdichtung bei gleichzeitig verminderter Bauhöhe zu erreichen.

Diese Aufgabe wird erfindungsgemäß dadurch gelöst, dass zum Schließen zunächst die in Durchtrittsrichtung vordere Stelle in einer das Schüttgut zurückhaltenden aber noch luftdurchlässigen Weise verschlossen wird und dass dann die hintere Stelle luftdicht verschlossen wird.

Die Erfindung betrifft ebenfalls eine Vorrichtung zur Durchführung des erfindungsgemäßen Verfahrens mit einem Abscheider mit einer Rohrleitung, in die in Durchtrittsrichtung hintereinander eine vordere Absperreinrichtung und eine hintere Absperreinrichtung eingebaut sind, wie es dem vorbeschriebenen Stand der Technik entspricht.

Bei dieser Vorrichtung ist erfindungsgemäß die vordere Absperreinrichtung so ausgebildet, dass sie in der Schließstellung einen Durchströmspalt für Luft offen läßt, der jedoch das Schüttgut zurückhält, und dass die hintere Absperreinrichtung luftdicht absperrt.

Zweckmäßige Ausgestaltungen und Weiterbildungen der Erfindung ergeben sich aus den Unteransprüchen.

Anders als beim Stand der Technik dienen die beiden Absperreinrichtungen nicht der Durchschleusung abgetrennter Schüttgutchargen sondern einem zusammenwirkenden Schließen (und Öffnen) der Rohrleitung, wobei der Schließvorgang mit dem Schließen der oberen Absperreinrichtung eingeleitet wird, dem alsbald die Betätigung der unteren Absperreinrichtung folgt, die infolge der geschlossenen oberen Absperreinrichtung von Schüttgut entlastet ist und dementsprechend zuverlässig luftdicht verschließt. Dies kann sowohl gegenüber zur Schüttgutförderung verwendetem Unterdruck wie Überdruck erfolgen.

Die beiden Verschlußstellen bzw. Absperreinrichtungen können ohne wesentlichen Zwischenabstand einander eng benachbart angeordnet sein, was zu einer geringen Bauhöhe führt. Zwar kann ein Rohrleitungsabschnitt zwischen dem Abscheider und den beiden Absperreinrichtungen zugleich als Speicherraum dienen, es ist jedoch zweckmäßig, die Absperreinrichtungen möglichst nahe unter dem Abscheider anzuordnen und das Schüttgut wenigstens zum Teil im unteren Bereich des Abscheiders zu sammeln.

Es ist vorgesehen, die hintere oder nachfolgende Absperreinrichtung zum luftdichten Verschließen mit einem Verschlußelement zu versehen, das schieberartig quer zur Achse der Durchtrittsöffnung bewegt und zum Erreichen der luftdichten Schließposition zusätzlich in Richtung der Achse der Durchtrittsöffnung bewegt wird, was zur sicheren Anlage auf mindestens einer Dichtung führt, bei der es sich um einen Dichtring handeln kann.

Ausführungsbeispiele der Erfindung werden nachfolgend anhand einer schematischen Zeichnung beschrieben. Dabei zeigen:
- Fig. 1:: eine schematische Darstellung eines Abscheiders mit zwei Absperreinrichtungen;
- Fig. 2:: eine Draufsicht auf die Absperreinrichtung für Luft ;
- Fig. 3:: eine Ansicht der einen Gehäusehälfte der Absperreinrichtung von innen;
- Fig. 4:: eine Ansicht der anderen Gehäusehälfte ;
- Fig. 5:: einen Schnitt längs der Linien V-V in Fig. 2 in größerem Maßstab mit dem Verschlußelement in der Schließstellung;
- Fig. 6:: zum Teil im Schnitt eine Ansicht eines Ausführungsbeispieles für eine luftdurchlässige Absperreinrichtung für Schüttgut und
- Fig. 7:: eine Prinzipsskizze eines abgewandelten Abscheiders mit zugehörigen Absperreinrichtung.

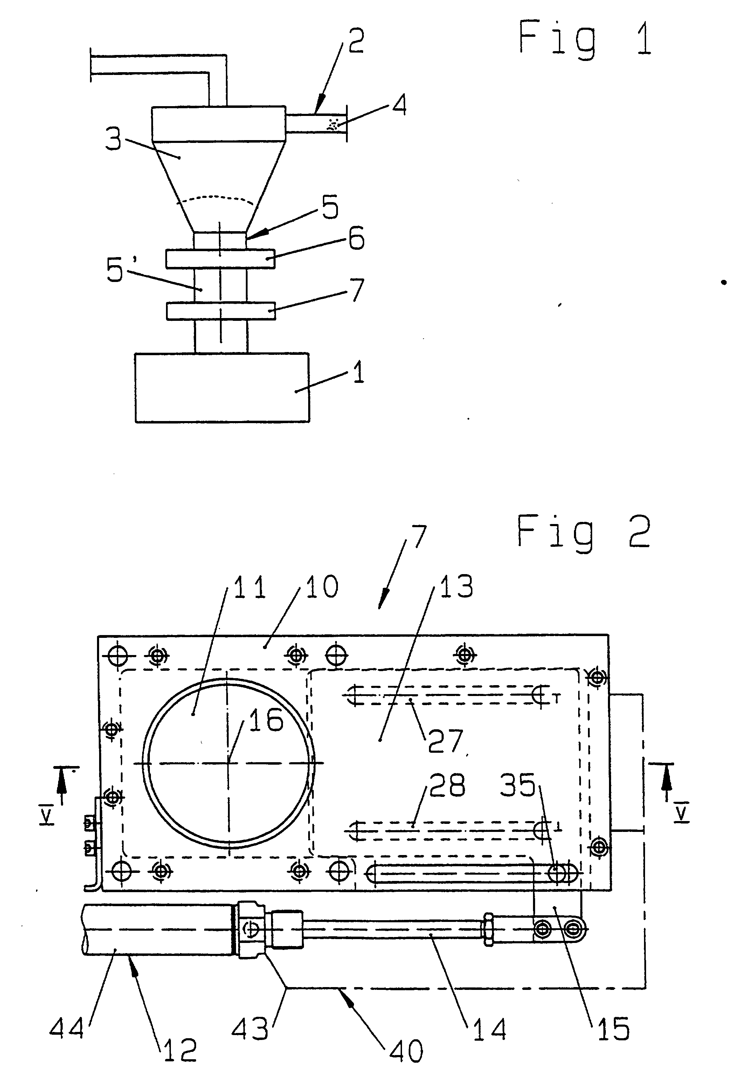

Zum Fördern von Schüttgut wie zum Beispiel von Granulat oder Pulver zu einer kunststoffverarbeitenden, auch Wiegeeinrichtungen und dergleichen aufweisenden Maschine 1 dienen häufig pneumatische Fördereinrichtungen 2 mit einem Abscheider 3, mit dessen Hilfe das Schüttgut 4 aus dem Luftstrom der pneumatischen Fördereinrichtung 2 entnommen und sodann über einen Strömungsweg 5 zum Beispiel in Gestalt einer Rohrleitung der verarbeitenden Maschine 1 zugeführt wird. Gemäß dem in Fig. 1 konkret dargestellten Ausführungsbeispiel fällt das Schüttgut 4 aus dem Abscheider 3 unmittelbar in die den Strömungsweg 5 zur verarbeitenden Maschine bildende Rohrleileitung 5'. Im Strömungsweg 5 befinden sich eine erste Absperreinrichtung 6 und in Förderrrichtung dahinter eine zweite Absperreinrichtung 7. Die erste Absperreinrichtung 6 dient zum Auffangen bzw. Zurückhalten des Schüttgutes 4, während die zweite Absperreinrichtung 7 in der Schließposition einen gegenüber Unterdruck oder gegenüber Überdruckgleichgültig von welcher Seite erwirkt - luftdichten Verschluß der Rohrleitung 5' bildet. Gemäß Ausführungsbeispiel ergeben die beiden Absperreinrichtungen 6 und 7 zusammen eine Vorrichtung 6' zum Öffnen und Schließen einer Leitung bzw. der Rohrleitung 5'.

Die pneumatische Fördereinrichtung 2 und ihr Abscheider 3 sind in grundsätzlich zum Stand der Technik gehörender Weise gestaltet.

Die für einen luftdichten Verschluß des Strömungsweges 5 bzw. der Rohrleitung 5' dienende Absperreinrichtung 7 umfaßt gemäß Fig. 2 ein Gehäuse 10 mit einer in den Querschnitt der Rohrleitung 5' übergehenden Durchtrittsöffnung 11 und mit einem Antrieb 12 für ein als Verschlußelement 13 dienendes, bewegbares Schließelement. Der Antrieb 12 ist eine Kolben-Zylindereinrichtung, deren bewegbares Antriebselement 14 über einen Mitnehmer 15 mit dem Verschlußelement 13 verbunden ist.

Das Verschlußelement 13 ist quer zur Achse 16 der Durchtrittsöffnung 11 im Gehäuse 10 geführt. Bei der Achse 16 handelt es sich zugleich um die Achse des Strömungsweges 5 bzw. der Rohrleitung 5'.

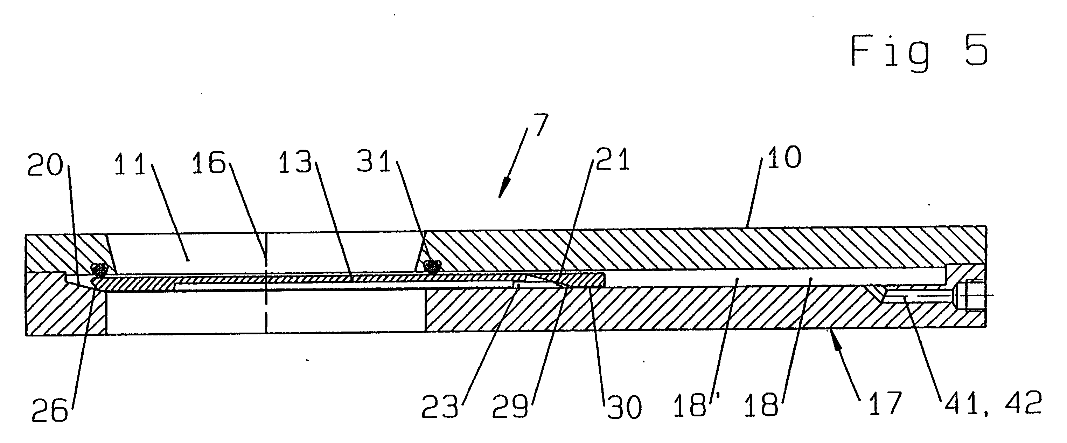

Das Gehäuse 10 ist zweiteilig und weist in seiner einen, im eingebauten Zustand unten befindlichen Gehäusehälfte 17 eine Ausnehmung 18 auf. Sie bildet eine Kammer 18', in der das zweckmäßigerweise nahezu plattenförmige Verschlußelement 13 angeordnet ist. Aus einer Öffnungsstellung gemäß Fig. 2 ist es in eine Schließstellung gemäß Fig. 5 mit Hilfe des Antriebes 12 bewegbar. Der Mitnehmer 15 am Antriebselement 14 greift dabei durch einen Schlitz 19 in der unteren Gehäusehälfte 17, wenn das Antriebselement 14 parallel zur Bewegungsrichtung des Verschlußelementes 13 bewegt wird.

Zum Öffnen und Schließen der Durchtrittsöffnung 11 bewegt sich das Verschlußelement 13 aber nicht nur quer zur Achse 16 der Durchtrittsöffnung 11, sondern im wesentlichen unmittelbar vor Beendigung der Schließbewegung und entsprechend bei Beginn des Öffnungshubes zugleich auch in Richtung der Achse 16. Dies geschieht zwangsgesteuert und wird erreicht mit Hilfe von Schrägflächen 20, 21 und 22. Die Schrägfläche 20 liegt unmittelbar neben der Durchtrittsöffnung 11, während die beiden anderen Schrägflächen 21 und 22 sich im Abstand von der Durchtrittsöffnung 11 befinden und jeweils zu Vorsprüngen 23, 24 gehören. Diese Vorsprünge 23 und 24 ragen in die Kammer 18', wie aus Fig. 5 hervorgeht.

Das Verschlußelement 13 weist an seinem gehäuseseitigen Ende 25 eine der Schrägfläche 20 zugeordnete Auflaufschrä- ge 26 und den Schrägflächen 21 und 22 zugeordnete Nuten 27 und 28 in seiner der Gehäusehälfte 17 zugewandten Plattenoberfläche 30 auf. Diese Nuten 27, 28 enden jeweils an Schrägflächen 29, die in die Plattenoberfläche 30 auslaufen und zusammen mit den Schrägfläche 20, 21 und mit der Auflaufschräge 26 bewirken, daß das Verschlußelement 13 unmittelbar vor Beendigung der Schließbewegung zugleich in Richtung der Achse 16 bewegt wird. Dabei legt sich das Verschlußelement 13 an eine Dichtung 31 an, bei der es sich zweckmäßigerweise um einen Dichtring handelt. Sobald das Verschlußelement 13 an der Dichtung 31 anliegt, ist die Durchtrittsöffnung 11 der Absperreinrichtung 7 nicht nur geschlossen, sondern auch gegenüber einem in der Rohrleitung 5' herrschenden Unterdruck sicher und zuverlässig abgedichtet.

Gemäß dem in den Figuren 2, 3 und 4 dargestellten Aufsführungsbeispiel weisen beide Gehäusehälften 17 und 32 je einen Längsschlitz 33, 34 auf. Die Längsschlitze 33 und 34 erstrecken sich parallel zu der Bewegungsrichtung des Mitnehmers 15. Führungselemente 35 befinden sich auf beiden Seiten des Mitnehmers 15 und greifen jeweils in einen der beiden Längsschlitze 33, 34.

Um pulverförmiges Gut oder Staub, die gegebenenfalls in die Kammer 18' bzw. in die Nuten 27, 28 gelangen, wieder entfernen zu können, ist eine Blaseinrichtung 40 vorgesehen. Diese Blaseinrichtung 40 steht über Bohrungen 41, 42 mit der Kammer 18' in Verbindung. Gemäß Ausführungsbeispiel dient der Antrieb 12 bzw. die Kolben-Zylindereinrichtung zugleich als Blaseinrichtung 40 und ist über eine Leitung 43 derart mit der zwischen den Gehäusehälften 17, 32 angeordneten Kammer 18' verbunden, daß Luft aus dem Zylinder 44 des Antriebes 12 beim Öffnungshub in die Kammer 18' strömt.

Die Bohrungen 41, 42 sind dabei ferner derart angeordnet, daß auch die Nuten 27, 28 in dem Verschlußelement 13 erreicht werden.

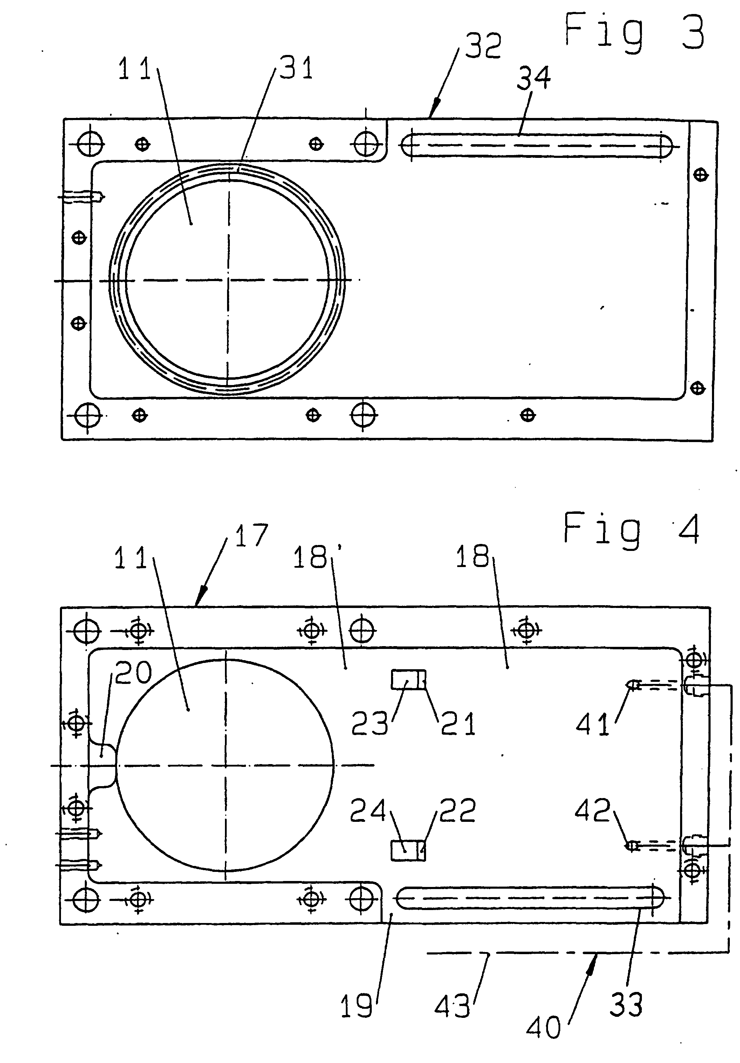

Wie ein Vergleich der Figuren 3, 4 bzw. 5 zeigt, liegen die Vorsprünge 23, bzw. 24 meist in den Nuten 27, 28, bis das plattenförmige Verschlußelement 13 beim Verschieben aufgrund der Schrägfläche 29 in Richtung der Achse 16 verlagert wird.

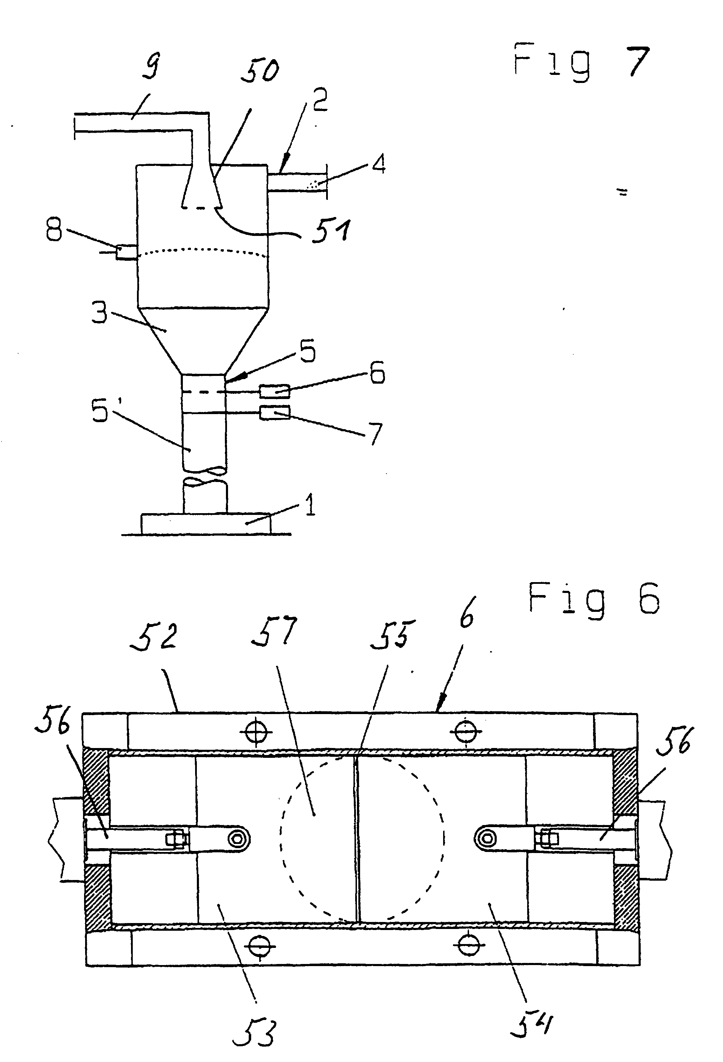

Wesentlich ist, daß die Leitung bzw. Rohrleitung 5 bezüglich des Schüttgutstromes und bezüglich des zumindest zeitweise abscheiderseitig herrschenden Unterdruckes in voneinander getrennter Art und Weise unterbrochen bzw. geöffnet und geschlossen wird. Dieser der Erfindung zugrundeliegende Gedanke läßt sich gemäß dem dargestellten und beschriebenen Ausführungsbeispiel lösen. Es bestehen aber auch noch andere Lösungsmöglichkeiten, so daß die Erfindung nicht auf das konkret dargestellte Ausführungsbeispiel beschränkt ist. So kann ein Absperrelement für das Schüttgut grundsätzlich auch unmittelbar an dem Abscheider (Fig. 7) angeordnet oder in den Abscheider integriert sein. Wichtig ist, daß für schüttgutfreie Luft zusätzlich eine drucksichere, von einem eigenen Antrieb und somit zwangsgesteuerte Einrichtung zum Abdichten beim Schließen der Leitung vorgesehen ist.

Auch kann die in Fig. 1 zwischen den beiden Absperreinrichtungen 6 und 7 dargestellte Rohrleitung nahezu oder vollständig entfallen, wenn die Absperreinrichtung 7 unmittelbar unter oder in Strömungsrichtung hinter der Absperreinrichtung 6 angeordnet werden soll. Grundsätzlich können sogar beide Absperreinrichtungen 6 und 7 in einem Gehäuse angeordnet sein.

Zur Erzielung einer geringen Bauhöhe ist es grundsätzlich zweckmäßig, wenn der Abscheider 3 eine Doppelfunktion besitzt und nicht nur als Abscheider zum Trennen von Schüttgut 4 und Transportluft dient, sondern auch als Auffangbehälter und als Lagerbehälter für das Schüttgut 4 Verwendung findet. Ein wirklicher Füllstand für das Schüttgut in dem Abscheider 3 nach dem Schließen der Absperreinrichtungen 6 und 7 ist mit punktierten Linien in Fig. 7 dargestellt. Das in dem Abscheider 3 aufgefangene Schüttgut reicht bis zu einem Fühler 8, bei dem es sich um eine grundsätzlich bekannte Einrichtung zum Melden des Füllstandes handelt.

Wie Fig. 7 ferner zeigt, sind die beiden Absperreinrichtungen 6 und 7 sehr nahe an dem Abscheider 3 bzw. unmittelbar unter diesem ohne zusätzliche Rohrleitungsstücke angeordnet. Grundsätzlich können die beiden Absperreinrichtungen 6 und 7 auch zusammen mit dem Abscheider 3 eine Einheit bilden oder in dessen unteren, meist konischen Teil integriert sein.

Die pneumatische Fördereinrichtung 2 kann entweder mit Druckluft oder mit Saugluft arbeiten. In beiden Fällen ist es zweckmäßig, wenn wenigstens zeitweise die Leitung 9, durch die die Förderluft aus dem Abscheider 3 abgeführt wird, einen in den Abscheider 3 ragenden Stutzen 50 mit einer Einrichtung 51 aufweist, mit deren Hilfe das Fördergut/Schüttgut 4 derart zurückgehalten wird, daß es nicht in die Leitung 9 gelangt. Diese Einrichtung 51 kann ein Sieb o. dgl. sein. Der Abscheider 3 ist zweckmäßigerweise unabhängig davon ein Zyklonabscheider o. dgl..

Die Fig. 7 betrifft somit eine Vorrichtung zum Trennen von Förderluft und Schüttgut in einer pneumatischen Fördereinrichtung 2, wobei die das Schüttgut 4 zurückhaltende, luftdurchlässige Absperreinrichtung 6 und die zweite, luftdicht schließende Absperreinrichtung 7 dem Abscheider 3 derart zugeordnet sind, daß dieser zumindest teilweise zugleich als Schüttgutbehälter dient.

Fig. 6 zeigt schließlich noch zum Teil im Schnitt eine Prinzipsskizze von wesentlichen Teilen einer luftdurchlässigen, das Schüttgut zurückhaltenden Absperreinrichtung 6. Sie weist in einem Gehäuse 52 aufeinander zu und voneinander weg verschiebbare Verschlußelemente 53 und 54 auf. In der Schließstellung gemäß Fig. 6 befindet sich ein luftdurchlässiger Spalt 55 zwischen den beiden Verschlußelementen 53 und 54. Sie sind in dem Gehäuse 52 geführt und werden mit Hilfe von Antriebselementen 56 zum Unterbrechen des Fördergutstromes vor eine Öffnung 57 bewegt.

Die Absperreinrichtung 6 eignet sich für Schüttgut bzw. Fördergut, das z.B. eine Korngröße aufweist, die größer oder etwa gleich der lichten Weite des Spaltes 55 zwischen den Verschlußelementen 53 und 54 ist. Auch kann das Fördergut aufgrund seiner Konsistenz den Spalt 55 verschließen.

Mit den beiden Absperreinrichtungen 6 und 7 wird ein Arbeitsverfahren in einer pneumatischen Förderleitung bzw. hinter deren Abscheider durchgeführt, wobei ein gasförmiges Fördermedium strömt und Fördergut mittransportiert. Das Fördermedium und das Fördergut gelangen zu einem Absperrorgan, wobei das Fördergut bereits weitgehend aus dem Fördermedium entfernt sein kann.

An der ersten Absperreinrichtung des Absperrorgans wird nur der eine der beiden Bestandteile in der Förderleitung am Weiterströmen gehindert. Dazu wird dem Fördergut an der ersten Absperreinrichtung der Durchtritt verwehrt. Um sicherzustellen, daß auch keine Luft mehr in der einen oder anderen Richtung durch Unterdruck oder Überdruck auf der einen oder anderen Seite strömen kann, ist die zweite Absperreinrichtung vorgesehen und in der Lage, einen luftdichten Verschluß herzustellen.

## Patentansprüche

1. Verfahren zum Öffnen und Schließen einer Rohrleitung (5') an einem Abscheider (3) für mittels Förderluft zugeführtes Schüttgut, bei dem zwei in Durchtrittsrichtung des Schüttguts hintereinander befindliche Absperreinrichtungen (6, 7) mit wenigstens einem Verschlußelement (13; 53, 54), das in einem Gehäuse (10, 52) angeordnet und mit einem Antrieb (12) versehen ist, geöffnet und jeweils zeitversetzt geschlossen werden, **dadurch gekennzeichnet, dass** zum Schließen des Strömungsweges (5) zunächst die in Durchtrittsrichtung des Schüttguts vordere Absperreinrichtung (6) in einer das Schüttgut zurückhaltenden aber noch luftdurchlässigen Weise verschlossen wird und dass dann die in Durchtrittsrichtung hintere Absperreinrichtung (7) luftdicht verschlossen wird.

2. Verfahren nach Anspruch 1, **dadurch gekennzeichnet, dass** das luftdichte Schließen der in Durchtrittsrichtung hinteren Absperreinrichtung (7) mittels eines Verschlußelements (13) erfolgt, das quer zur Achse (16) des Strömungswegs (5) bewegt und zusätztich in Richtung der Achse (16) abdichtend angedrückt wird.

3. Verfahren nach Anspruch 1 oder 2, **dadurch gekennzeichnet, dass** das luftdichte Schließen der in Durchtrittsrichtung hinteren Absperreinrichtung (7) mittels eines Verschlußelements (13) erfolgt, das zwangsgesteuert wird.

4. Vorrichtung zur Durchführung des Verfahrens nach Anspruch 1 mit einem Abscheider (3) mit einer Rohrleitung (5'), in die in Durchtrittsrichtung des Schüttgutes hintereinander eine vordere Absperreinrichtung (6) und eine hintere Absperreinrichtung (7) eingebaut sind, **dadurch gekennzeichnet, dass** die vordere Absperreinrichtung (6) so ausgebildet ist, dass sie in der Schließstellung einen Durchströmspalt (55) für Luft offenläßt, der jedoch das Schüttgut zurückhält, und dass die hintere Absperreinrichtung (7) luftdicht schließt.

5. Vorrichtung nach Anspruch 4, **dadurch gekennzeichnet, dass** die beiden Absperreinrichtungen (6, 7) unmittelbar in Durchtrittsrichtung des Schüttgutes hinter dem Abscheider (3) angeordnet sind.

6. Vorrichtung nach Anspruch 4 oder 5, **dadurch gekennzeichnet, dass** die in Durchtrittsrichtung hintere Absperreinrichtung (7) als Verschlußelement (13) einen quer zur Achse (16) des Strömungsweges (5) bewegbaren und in einem Gehäuse geführten Schieber aufweist, dem mindestens eine Schrägfläche (20, 21, 22) zum axial abdichtenden Andrücken in seiner Schließposition zugeordnet ist.

7. Vorrichtung nach Anspruch 6, **dadurch gekennzeichnet, dass** das Verschlußelement (13) plattenförmig ist und den Schrägflächen (21, 22) zugewandte Nuten (27, 28) aufweist, die ihrerseits an in die Schieberoberfläche (30) auslaufenden Schrägflächen (29) enden.

8. Vorrichtung nach Anspruch 6 oder 7, **dadurch gekennzeichnet, dass** das in Schließrichtung vordere Ende des Verschlußelements (13) eine Auflaufschräge (26) aufweist.

9. Vorrichtung nach einem der Ansprüche 4 bis 8, **dadurch gekennzeichnet, dass** die hintere Absperreinrichtung (7) ein Gehäuse (10) aus zwei Gehäusehälften (17, 32) aufweist, von denen eine (17) mit einer Ausnehmung (18) versehen ist, die eine Kammer (18') zur Aufnahme des Verschlußelements (13) bildet.

10. Vorrichtung nach Anspruch 9, **dadurch gekennzeichnet, dass** die Gehäusehälften (17, 32) zwei in Bewegungsrichtung des Verschlußelementes (13) verlaufende Längsschlitze (33, 34) aufweisen, in die Führungselemente (35) eines Mitnehmers (15) für die Führung des Verschlußelementes (13) eingreifen.

11. Vorrichtung nach einem der Ansprüche 4 bis 10, **dadurch gekennzeichnet, dass** der hinteren Absperreinrichtung (7) eine Blaseinrichtung (40) zugeordnet ist, die mit mindestens einer Blasbohrung (41, 42) in einer das Verschlußelement (13) aufnehmenden Gehäusekammer (18') der Absperreinrichtung (7) mündet.

12. Vorrichtung nach Anspruch 11, **dadurch gekennzeichnet, dass** der hinteren Absperreinrichtung (7) als Antrieb (12) eine Kolben-Zylindereinrichtung die neben dem Gehäuse angeordnet ist und ein Antriebselement (14) parallel zur Absperreinrichtung (7) aufweist, wobei die Kolben-Zylinder einrichtung über mindestens eine Leitung (43) derart mit der Gehäusekammer (18') verbunden ist, dass beim Öffnungshub Luft aus dem Zylinder (44) in die Kammer (18') strömt.

13. Vorrichtung nach Anspruch 11 oder 12 und Anspruch 7, **dadurch gekennzeichnet, dass** gehäuseseitig jeweils eine Blasbohrung (41, 42) zum Ausblasen der Nuten (27, 28) vorgesehen ist.

14. Vorrichtung nach einem der Ansprüche 4 bis 13, **dadurch gekennzeichnet, dass** die in Durchtrittsrichtung vordere Absperreinrichtung (6) zwei in einem Gehäuse (52) geführte Verschlußelemente (53, 54) aufweist, die entgegengesetzt in die Öffnungsstellung und in die Schließstellung mittels Antriebselementen (56) bewegbar sind, in der sie zwischen sich den luftdurchlässigen Durchströmspalt (55) bilden.

## Claims

1. Method of opening and closing a pipe duct (5') at a separator (3) for bulk material fed by means of conveying air, in which two blocking devices (6, 7), which are disposed one behind the other in transit direction of the bulk material, with at least one closure element (13; 53, 54), which is arranged in a housing (10, 52) and provided with a drive (12), are opened and - with a displacement in time in each instance - closed, **characterised in that** for closing the flow path (5) initially the blocking device (6) forward in transit direction of the bulk material is closed in a manner restraining the bulk material, but still permeable by air, and then the blocking device (7) rearward in transit direction is closed in air-tight manner.

2. Method according to claim 1, **characterised in that** the air-tight closure of the blocking device (7) rearward in transit direction is effected by means of a closure element (13) which moves transversely to the axis (16) of the flow path (5) and additionally is sealingly urged in the direction of the axis (16).

3. Method according to claim 1 or 2, **characterised in that** the air-tight closure of the blocking device (7) rearward in transit direction is effected by means of a closure element (13) which is constrainedly controlled.

4. Device for carrying out the method according to claim 1, with a separator (3) with a pipe duct (5'), in which a forward blocking device (6) and a rearward blocking device (7) are installed one after the other in transit direction of the bulk material, **characterised in that** the forward blocking device (6) is so constructed that in the closed setting it leaves open a throughflow gap (55) for air, but restrains the bulk material, and that the rearward blocking device (7) closes in air-tight manner.

5. Device according to claim 4, **characterised in that** the two blocking devices (6, 7) are arranged directly behind the separator (3) in transit direction of the bulk material.

6. Device according to claim 4 or 5, **characterised in that** the blocking device (7) rearward in transit direction has as closure element (13) a slide which is movable transversely to the axis (16) of the flow path (5) and is guided in a housing and which is associated with at least one inclined surface (20, 21, 22) for the axially seating urging into its closed position.

7. Device according to claim 6, **characterised in that** the closure element (13) is plate-shaped and has grooves (27, 28) which face the inclined surfaces (21, 22) and which in turn end at inclined surfaces (29) running out into the slide surface (30).

8. Device according to claim 6 or 7, **characterised in that** the end of the closure element (13) which is forward in closing direction has a run-up chamfer (26).

9. Device according to one of claims 4 to 8, **characterised in that** the rearward blocking device (7) comprises a housing (10) consisting of two housing halves (17, 32), of which one (17) is provided with a recess (18) forming a chamber (18') for reception of the closure element (13).

10. Device according to claim 9, **characterised in that** the housing halves (17, 32) have two longitudinal slots (33, 34) which extend in the direction of movement of the closure element (13) and in which guide elements (35) of an entrainer (15) engage for guidance of the closure element (13).

11. Device according to one of claims 4 to 10, **characterised in that** the rearward blocking device (7) is associated with a blast device (40) which opens by at least one blast bore (41, 42) into a housing chamber (18'), which receives the closure element (13), of the blocking device (7).

12. Device according to claim 11, **characterised in that** the rearward blocking device (7) has as drive (12) a piston-cylinder device arranged adjacent to the housing and a drive element (14) parallel to the blocking device (7), wherein the piston-cylinder device is connected with the housing chamber (18') by way of at least one duct (43) in such a manner that air flows out of the cylinder (44) into the chamber (18') during the opening stroke.

13. Device according to claim 11 or 12 and claim 7, **characterised in that** a respective blast bore (41, 42) for blowing out the grooves (27, 28) is provided at the housing side.

14. Device according to one of claims 4 to 13, **characterised in that** the blocking device (6) forward in transit direction comprises two closure elements (53, 54) which are guided in a housing (52) and which are movable by means of drive elements (56) oppositely into the open setting and into the closed setting in which they form therebetween the air-permeable throughflow gap (55).

## Revendications

1. Procédé pour ouvrir et fermer une conduite (5') d'un collecteur (3) pour les produits en vrac apportés par l'air de transport, dans lequel sont disposés deux dispositifs de blocage (6, 7) se trouvant l'un derrière l'autre dans la direction de passage des produits en vrac, avec au moins un élément de fermeture (13 ; 53, 54), qui est disposé dans un boîtier (10, 52) et est pourvu d'un entraînement (12) qui les ouvre et les ferme après un laps de temps approprié, **caractérisé en ce que** pour la fermeture de la voie d'écoulement (5), c'est d'abord le dispositif de blocage (6), antérieur dans la direction de passage des produits en vrac, qui est fermé, en retenant les produits en vrac, mais étant encore perméable à l'air, **en ce qu'**alors, le dispositif de blocage (7) postérieur dans la direction de passage est fermé étanche à l'air.

2. Procédé selon la revendication 1, **caractérisé en ce que** la fermeture étanche à l'air du dispositif de blocage (7), postérieur dans la direction du passage, a lieu au moyen d'un élément de fermeture (13), qui est déplacé transversalement à l'axe (16) de la voie d'écoulement (5) et qui est en outre pressé en direction de l'axe (16) pour obtenir l'étanchéité.

3. Procédé selon la revendication 1 ou 2, **caractérisé en ce que** la fermeture étanche à l'air du dispositif de blocage (7), postérieur dans la direction du passage a lieu au moyen d'un élément de fermeture (13), qui est commandé par force.

4. Dispositif pour la mise en oeuvre du procédé selon la revendication 1, avec un collecteur (3) avec une conduite (5'), dans laquelle, dans la direction de passage des produits en vrac sont insérés un dispositif de blocage antérieur (6) et un dispositif de blocage postérieur (7), **caractérisé en ce que** le dispositif de blocage antérieur (6) est construit de telle sorte qu'il laisse en position fermée une fente de passage (55) pour l'air, qui retient cependant les produits en vrac et **en ce que** le dispositif de blocage postérieur (7) ferme de manière étanche à l'air.

5. Dispositif selon la revendication 4, **caractérisé en ce que** les deux dispositifs de blocage (6, 7) sont disposés immédiatement, dans la direction de passage des produits en vrac, derrière le collecteur (3).

6. Dispositif selon la revendication 4 ou 5, **caractérisé en ce que** le dispositif de blocage (7), postérieur en direction de passage, comprend en tant qu'élément de fermeture (13) un tiroir pouvant se déplacer transversalement par rapport à l'axe (16) de la voie d'écoulement (5) et guidé dans un boîtier, tiroir auquel est au moins adjoint une surface oblique (20, 21, 22) pour obtenir par pression dans la position fermée l'étanchéité en direction axiale.

7. Dispositif selon la revendication 6, **caractérisé en ce que** l'élément de fermeture (13) est en forme de plaque et comporte, orientées vers les surfaces obliques (21, 22), des rainures (27,28) qui finissent elles-mêmes aux surfaces obliques (29) qui se terminent dans la surface de tiroir (30).

8. Dispositif selon la revendication 6 ou 7, **caractérisé en ce qu'**en direction de fermeture l'extrémité antérieure de l'élément de fermeture (13) comporte une surface oblique de montée (26).

9. Dispositif selon l'une quelconque des revendications 4 à 8, **caractérisé en ce que** le dispositif de blocage postérieur (7) comprend un boîtier (10) fait de deux moitiés de boîtier (17, 32), dont un (17) est pourvu d'un creux (18), qui forme une chambre (18') pour la réception de l'élément de fermeture (13).

10. Dispositif selon la revendication 9, **caractérisé en ce que** les moitiés de boîtier (17, 32) comportant deux fentes oblongues (33, 34) s'étendant dans la direction de déplacement de l'élément de fermeture (13), dans lesquelles s'engagent des éléments de guidage (35) d'un entraîneur (15) pour le guidage de l'élément de fermeture (13).

11. Dispositif selon l'une quelconque des revendications 4 à 10, **caractérisé en ce qu'**au dispositif de blocage postérieur (7) est adjoint un dispositif de soufflage (40), qui débouche par au moins un perçage de soufflage (41, 42) dans une chambre de boîtier (18') qui recueille l'élément de fermeture (13) du dispositif de fermeture (7).

12. Dispositif selon la revendication 11, **caractérisé en ce qu'**au dispositif de blocage (7) postérieur est adjoint comme entraînement (12) un dispositif piston / cylindre installé à côté du boîtier, et comportant un élément d'entraînement (14) parallèle au dispositif de blocage (7), le dispositif piston / cylindre étant relié au moins par une conduite (43) à la chambre de boîtier (18') de telle sorte que de l'air s'écoule du cylindre (44) dans la chambre (18') lors de la course d'ouverture.

13. Dispositif selon la revendication 11 ou 12 et la revendication 7, **caractérisé en ce qu'**il est prévu, du côté du boîtier, dans chaque cas un perçage de soufflage (41, 42) pour purger les rainures (27, 28).

14. Dispositif selon l'une quelconque des revendications 4 à 13, **caractérisé en ce que** le dispositif de blocage (6) antérieur dans la direction de passage comporte deux éléments de fermeture (53, 54) guidés dans un boîtier (52), qui peuvent être déplacés en sens opposés à l'aide d'éléments d'entraînement (56) dans la position d'ouverture et dans la position de fermeture, dans laquelle ils forment entre eux la fente d'écoulement (55) perméable à l'air.
